(19) **Europäisches Patentamt**

**European Patent Office**

**Office européen des brevets**

(11) **EP 0 791 384 B1**

(12) **EUROPEAN PATENT SPECIFICATION**

(45) Date of publication and mention
of the grant of the patent:
**22.01.2003 Bulletin 2003/04**

(51) Int Cl.7: **B01D 19/04**, A01N 25/30

(21) Application number: **97102887.3**

(22) Date of filing: **21.02.1997**

(54) **Foam control agents for silicone surfactants in agriculture**

Schaumregulierungsmittel für in Landwirtschaft verwendete Silikontenside

Agents anti-mousse pour produits tensio-actifs à base de silicone à usage agricole

(84) Designated Contracting States:
**AT BE CH DE DK ES FI FR GB GR IE IT LI LU MC NL PT SE**

(30) Priority: **21.02.1996 US 12017**

(43) Date of publication of application:
**27.08.1997 Bulletin 1997/35**

(73) Proprietor: **CROMPTON CORPORATION**
**Greenwich Connecticut 06831-2559 (US)**

(72) Inventors:
• **Policello, George A.**
**Ossining, New York 10562 (US)**
• **Murphy, Gerald J.**
**Hopewell Junction, New York 12533 (US)**

(74) Representative: **Körber, Wolfhart, Dr. rer.nat.**
**Patentanwälte**
**Mitscherlich & Partner,**
**Sonnenstrasse 33**
**80331 München (DE)**

(56) References cited:
**EP-A- 0 459 512**   **EP-A- 0 648 413**
**WO-A-94/22311**   **US-A- 4 656 162**
**US-A- 5 104 647**

**Description**

BACKGROUND OF THE INVENTION

One of the most common deficiencies with agricultural adjuvants comprised of alkoxylate organosilicone surfactants is that foam generated from these products is difficult to control. Organosilicone surfactants, especially trisiloxane alkoxylates (TSA), are able to reduce the aqueous surface tension of spray solutions to values below 21 mN/m. At these low values it is difficult for conventional foam control agents, such as, polydimethylsiloxanes (PDMS), to spread at the liquid/air interface, because the bulk surface tension of these foam control agents is similar to the aqueous surface tension of these organosilicone surfactants.

In a related publication, EP 0046342 discloses the use of an antifoam in a detergent composition containing a PDMS, and a silicone-polyoxyalkylene comb copolymer ("Copolymer"). The Copolymer therein is a spreading agent for the defoamer composition, not a defoamcr. US Patent No. 4,514,319 to Kulkarni et al. also describes the use of a Copolymer as a component in an antifoam composition as a spreading agent and an emulsifier, but not as a foam control agent ("FCA").

WO 94/22311 describes a superspreading, low-foam agricultural spray mixture and the preparation thereof. The mixture comprises a trisiloxane surfactant which imparts superspreading and exhibits low-foaming. However, the mixture does not comprise a foam control agent.

EP 0 648 413 discloses linear organosilicone compounds as adjuvants for agricultural applications having improved spreading properties. Specifically, there is provided a composition comprising an oil and a linear alkylsiloxane. The alkylsilicone have been found to promote the spreading of the carrier oil on plant and/or arthropod surfaces.

EP 0 459 512 describes a silicone oil based antifoam composition comprising an organomodified silicone copolymer, a hydrophobic filler and an emulsifier composition containing a sucrose carboxylic acid ester and an organomodified silicone emulsifier. The emulsifier composition has been found to be particularly effective in dispersing organic oils and silicone antifoams in aqueous compositions.

Summary of the Invention

The present invention teaches copolymers with a low degree of polymerization (3 to 4 Si units) provide control for foams generated by organosilicone based surfactants in water and formulations containing the same without the need for an additional antifoam component. The siloxanc alkoxylate ("SA") FCA of the present invention is a compound of the formula

$$(CH_3)_3SiO[SiO(CH_3)_2]_X[SiOCH_3R^1]_YSi(CH_3)_3 \qquad (I)$$

wherein $X + Y = 1$ to 2, $Y \geq 1$, $R^1$ is an alkylenoxide group of the formula $C_aH_{2a}O(C_3H_6O)_zR^2$ wherein $a = 3$ to 4, $z$ is 1 to 15, $R^2$ is hydrogen, a hydrocarbon radical of 1 to 4 carbons *or* acetyl.

DETAILED DESCRIPTION OF THE INVENTION

It is an object of this invention to provide an SA composition for use in agricultural formulations that gives improved foam control for foams generated from organosilicone surfactants in aqueous systems, especially relative to conventional PDMS based FCA's. It is another object of this invention to provide a water insoluble SA FCA that is soluble in a surfactant matrix comprised of a Copolymer alone or in mixtures with nonsilicon (i.e., not Si based) surfactants. FCA's which arc insoluble in the surfactant matrix cause the mixture to phase separate in a short period of time, requiring the applicator to remix the components prior to use to ensure full efficacy and are undesirable. A further object of this invention is to provide a clear, homogeneous, low foaming agricultural formulation having a water insoluble SA FCA, and a water soluble or dispersible TSA when said formulation is used in an aqueous mixture.

The compositions of the present invention are comprised of a surfactant matrix, a SA FCA and optional ingredients which arc to be placed in water. Novel low foam agricultural adjuvant compositions comprise a compatible mixture of about 0.1% to about *50* % by weight of a SA FCA, and from about 99.9% to 50% by weight of the surfactant matrix. In the formulation, there is the adjuvant composition (i.e., SA FCA and Copolymer surfactant) present in combination with an active ingredient, e.g., a pesticide, at 1-95% by weight of the active ingredient.

## SURFACTANT MATRIX

The surfactant matrix is made up of at least one organosilicone surfactant, preferably a trisiloxane alkoxylate, that is dispersible or soluble in water, e.g., 0.025 to 1 % by weight solubility in water at room temperature. The organosilicone surfactant is of the structure $R^3(CH_3)_2SiO[SiO(CH_3)_2]_b[SiOCH_3R^3]_cSi(CH_3)_2R^3$ (II) wherein b is 0 to 100, c is 1 to 50 and $R^3$ is an alkyl of 1 to 4 carbons, hydrogen, hydroxyl or a polyether. The polyether may be of 200 to 3000 molecular weight and may be a mix of ethylene oxide (EO) and propylene oxide (PO) with 10 to 90 % PO, and between 90 and 10% EO by weight. The polyether may be random or blocked and may be uncapped (i.e., -hydroxy terminated) or capped with an alkyl of one to four carbons or an acetyl. "b" is preferably 0 to 1, most preferably 0, C is preferably 1 to 2, most preferably, 1 and the polyether preferably has a molecular weight between 200 and 600. This surfactant is an agricultural adjuvant and should be selected from those which function as such. For example SILWET L-77® silicone is such a commercially available adjuvant, from OSi Specialties. Inc. of Danbury, CT.

The surfactant matrix may also incorporate organic based cosurfactants that have an average of less than or equal to ten carbons in the main chain (not including branching from the main chain) of the hydrophobic group. Examples of these short chain surfactants are trimethylnonanol ethoxylates (e.g., TERGITOL® TMN-6, Union Carbide Corporation, Danbury, CT), (isodecyl alcohol ethoxylates (e.g., RHODASURF® DA-630, Rhone-Poulenc, Cranberry, NJ): alkyl polyglucosides (e.g., AGRIMUL® 2067, Henkel Corporation, Cincinnati, OH), acetylenic diol ethoxylates (e.g., SURFYNOL® 440, Air Products, Allentown, PA). In addition, the surfactant matrix may include polyalkyleneoxide copolymer surfactants, such as copolymers of polyoxyethylene and polyoxypropylene (e.g., PLURONIC® surfactants, BASF Corporation, Parsippany, NJ). If the cosurfactant is used, the proportion of the organosilicone surfactant to the organic cosurfactant contained in the surfactant matrix is in the ratio of 1 to 99% by weight of the organosilicone to 99 to 1% of the organic cosurfactant.

## COPOLYMER FOAM CONTROL AGENT

The structure of the SA FCA is set forth above at formula (I). The FCA must be insoluble in water at concentrations $\geq 0.1$ wt% and must be soluble or form a stable dispersion (i.e., does not readily phase separate) in the surfactant matrix at greater than 50 wt % at ambient conditions. In the formula above Y is preferably 1, X is preferably 0, a is preferably 3, z is preferably I to 5, and $R^2$ is preferably hydrogen.

## OPTIONAL INGREDIENTS

Optionally, the composition can include from about 0.1 to 3 % by weight of a hydrophobized silica filler, for example, TULLANOX® 500 (Tulco), and AEROSIL® R-812 (Degussa). While such a foam breaking substance may be added, the present composition may be essentially free of FCA's other than the SA FCA.

The composition may also include active ingredients, including, jet dyes, coating resins, permanent press resins or an agricultural active ingredient, e.g., a pesticide. The term "pesticide" as used herein, any compound used to destroy pests, including herbicides, fungicides, insecticides, rodenticides and the like. The term specifically includes oily materials not otherwise toxic but nevertheless used as pesticides in the destruction of aphids, scale insects, and the like by suffocation (*e.g.*, by clogging their spiracles). Illustrative examples of pesticides which can be employed in the present invention include, but are not limited to, growth regulators, photosynthesis inhibitors, pigment inhibitors, mitotic disruptors, lipid biosynthesis inhibitors, cell wall inhibitors, and cell membrane disruptors. Some specific examples of pesticide compounds that can be used in the compositions of the invention are phenoxy acetic acids, pyridate norflurazone: trifluralin; glyphosate, clcthodim, flusilazole, permethrin, isoxaben, paraquat, glufosinate, and bromoxynil. The amount of pesticide employed in compositions of the invention varies with the type of pesticide employed and is known to one of skill in the art.

## MANUFACTURE

The manufacture of the SA FCA and the Copolymer surfactant are well known in the art. The organic surfactants, silica and pesticides generally are commercially available and are well known in the art to manufacture.

The composition is prepared by combining the components in a desired ratio, and mixing these ingredients according to conventional methods that will provide a clear to slightly hazy, uniform product. Mixing by mechanical agitator or a mechanical shaker arc examples of such methods. When the optional silica is included in the composition it is first added to the SA FCA component using high shear mixing, such as a Lightnin' mixer.

USE

Compositions of the present invention are intended to be used in agricultural applications. The adjuvant compositions of the SA FCA and the surfactant matrix are added to active ingredient(s) to make up agricultural formulations, e.g., "In-can" formulations. Alternatively, the SA FCA may be added to the active ingredient and surfactant matrix, before or after they are added to water. In such an instance the SA FCA may be added in an aqueous solution or emulsion, or with a solvent such as IPA, dipropylene glycol and the like. Emulsions are made as known in the art and may require standard emulsifiers, though they should contain on average less than 10 carbons in their main chain, not including branching within such chain.

The formulations are mixed with water for use on crops, and generally arc added to water at 0.001 to 5 weight percent The compositions of the present invention will not phase separate in the formulation, so it makes it easy to add the formulation to the water and there will not be an uneven distribution of products when the formulation is added to the water. The compositions of the present invention most preferably arc used where foam is a problem such as in mix and spray tanks containing organosilicone adjuvants which are to be spray applied to crops.

EXAMPLES

The following examples are presented to further illustrate and explain the present invention and should not be taken as limiting in any regard. Unless otherwise indicated, all parts and percentages are by weight, and are based on the weight at the particular stage of the processing being described.

Example 1

The preparation of the components of this present invention are described in this example. The SiH intermediates were prepared by acid equilibration as outlined in *Silicones, Chemistry and Technology* (CRC Press, 1991, pages 1 to 6, and U.S. Pat. No. 5,145,879 to Budnik, *et. al.*). The intermediates were then used to prepare a number of alkyleneoxide modified silicones. A reaction vessel containing 529.3 g (2.379 moles) of an SiH intermediate ($Me_3SiO$ $[MeSi(H)O]_{1.0} SiMe_3$) and 94.1 g (0.578 moles) allyl alcohol propoxylate (AAP) (ARCO Chemical Company, Newtown Square, PA) was heated to 90°C while under a nitrogen blanket The reaction was catalyzed with 1.5 mL of chloroplatinic acid solution (1.0 wt% in ethanol), based on the total charge. The reaction mixture exotherm was maintained between 90 and 110°C while the remaining 376.6 g (2310 moles) of AAP was added dropwise. The reaction mixture was allowed to stir at 100°C for 20 minutes after the addition of the AAP is complete. The product showed no residual SiH when introduced to a fermentation tube containing KOH/water/ethanol solution. The product was cooled to 70°C and neutralized with 70 g $NaHCO_3$, and stirred for an additional hour. The product was filtered, and stripped on a Rotovap at 70 °C /≤ 5 mm Hg for 2 hours. The resulting product was a clear pale amber liquid, with a Brookfield viscosity of 10 cps at 25 °C, using spindle LV 2 at 60 rpm. This material is shown as SA-1 in Table 1.

Using this procedure, various SA FCA were prepared, having the general structure

$$(CH_3)_3SiO[SiO(CH_3)_2]_X[SiOCH_3R]_Y Si(CH_3)_3$$

wherein the values for X, Y and R, the type of alkyleneoxide group contained in the SA component, are varied as listed in Table 1 below.

Table 1 -

| Structures of Siloxane Alkoxylate FCA's | | | | |
|---|---|---|---|---|
| Compound | X | Y | R | Water [1] Soluble |
| SA-1 | 0 | 1 | $C_3H_6O(C_3H_6O)_2H$ | No |
| SA-2 | 0 | 1 | $C_3H_6O(C_3H_6O)_3H$ | No |
| SA-3 | 0 | 1 | $C_3H_6O(C_3H_6O)_{13}H$ | No |
| Comparative Components: | | | | |
| SA-A | 15 | 5.5 | $C_3H_6O(C_3H_6O)_{25}H$ | No |
| SA-B | 70 | 5.2 | $C_3H_6O(C_3H_6O)_{25}H$ | No |
| SA-C | 5 | 7 | $C_3H_6O(C_3H_6O)_{13}Bu$ | No |

1. Water solubility tested at 0.1 and 5 wt%, at 25°C.

Tables 2 and 3 gives a description of the surfactants, which comprise the surfactant matrix of the following examples, either as the sole component or in combination with another surfactant.

Table 2

| Description of Trisiloxane Alkoxylates | |
|---|---|
| Component | Description |
| TSA-A | Trisiloxane Ethoxylate, 7.5 EO, Methyl Capped: SILWET L-77® |
| TSA-B | Trisiloxane Ethoxylate, 7.5 EO, Uncapped; SILWET® 408 |
| TSA-C | Trisiloxane Ethoxylate, ~8 EO, Acetyl Capped (Competitive Product) |
| TSA-D | Trisiloxane Alkoxylate, ~6 EO, ~3 PO, Uncapped (Competitive Product) |

Table 3

| Cosurfactants | |
|---|---|
| **Nonsilicon Surfactant** | **Description** |
| TMN-6 | Trimethylnonanol Ethoxylate, ~6 EO |
| DA-6 | Isodecyl Alcohol Ethoxylate, ~6 EO |
| O-4 | Octyl Alcohol Ethoxylate, ~4 EO |
| AD-30 | Acetylenic Diol Ethoxylate, ~30 EO |
| PAO-1 | Polyalkyleneoxide Copolymer (Block) EO/PO/EO, ~20% EO |

Example 2

Table 4 demonstrates that the SA's of this instant invention provide clcar, homogeneous mixtures with the surfactant matrix. The components were combined in a 2 dram vial and mixed with a spatula to provide a uniform mixture. The mixture was allowed to stand undisturbed for 1 hour at ambient temperatures. The clarity of each mixture was determined visually. The SA's of the present invention provide homogeneous mixtures with the various surfactant components, while a conventional silicone oil used as a FCA (PDMS-350), is insoluble in the surfactant matrix.

Table 4 -

| Compatibility of Foam Control Agents in Surfactant Matrix | | | | | | | |
|---|---|---|---|---|---|---|---|
| | Formulation Number | | | | | | |
| | Weight Percent | | | | | | |
| Component | a | b | c | d | e | f | g |
| TSA-A | 50 | 50 | | | 25 | | 50 |
| TSA-B | | | 50 | | | | |
| TSA-D | | | | 50 | | 25 | |
| SA-1 | 50 | | 50 | | 25 | | |
| SA-2 | | 50 | | 50 | | 25 | |
| TMN-6 | | | | | 50 | | |
| PAO-1 | | | | | | 50 | |
| PDMS-350 | | | | | | | 50 |
| Total | 100 | 100 | 100 | 100 | 100 | 100 | 100 |
| Solubility | Clear | Clear | Clear | Clear | Clear | Clear | Cloudy/Separates |

Example 3

Table 5 provides the composition of surfactant matrix formulations containing a SA FCA. Foam control was assessed by placing 10 mL of 0.1 wt% of the FCA/surfactant matrix in a 8 dram vial, and agitating the solution on a wrist action shaker for one minute. The foam height was recorded as a function of time. TSA's with the SA FCA were compared to aqueous solutions of the TSA alone.

Table 5

| Formulation ID | | | | | | | | | | | | |
|---|---|---|---|---|---|---|---|---|---|---|---|---|
| | Weight Percent | | | | | | | | | | | |
| Component | 1 | 2 | 3 | 4 | 5 | 6 | 7 | 8 | 9 | 10 | 11 | 12 |
| TSA-A | 80 | 80 | 80 | | | | | | | 80 | 80 | 80 |
| TSA-B | | | | 80 | 80 | | | | | | | |
| TSA-C | | | | | | 80 | 80 | | | | | |
| TSA-D | | | | | | | | 80 | 80 | | | |
| SA-1 | | | 20 | | 20 | | 20 | | 20 | | | |
| SA-2 | | 20 | | 20 | | 20 | | 20 | | | | |
| SA-3 | 20 | | | | | | | | | | | |
| SA-A | | | | | | | | | | 20 | | |
| SA-B | | | | | | | | | | | 20 | |
| SA-C | | | | | | | | | | | | 20 |

Table 6 demonstrates that the inclusion of the SA FCA reduced foam in all cases relative to the TSA without the SA compound. For foams generated by TSA as the sole foaming agent, the SA FCA with 2 PO provided the best control. Foam control ability for the SA FCA proceeds: 2 PO > 3 PO > 13 PO.

Table 6 -

| | | Foam Height (mm) vs Time | | | |
|---|---|---|---|---|---|
| Run No. | Formulation ID | Initial | 1 min. | 5 min. | 10 min. |
| 1 | TSA-A | 10.0 | 8.0 | 6.5 | 6.0 |
| 2 | 1 | 5.5 | 5 | 4 | 3.5 |
| 3 | 2 | 6.5 | 5.5 | 3.5 | 0.5 |
| 4 | 3 | 3.0 | 2.0 | 0 | 0 |
| 5 | 10 | 8.0 | 6.5 | 6.0 | 5.5 |
| 6 | 11 | 10.5 | 9.0 | 9.0 | 8.5 |
| 7 | 12 | 9.5 | 9.0 | 8.5 | 5.5 |
| 8 | TSA-B | 9.0 | 8.0 | 6.0 | 6.0 |
| 9 | 4 | 3.5 | 2.0 | 0 | 0 |
| 10 | 5 | 3.5 | 3.0 | 1.0 | 0 |
| 11 | TSA-C | 11.0 | 9.5 | 8.0 | 7.0 |
| 12 | 6 | 3.0 | 3.0 | 2.0 | 0 |
| 13 | 7 | 4.0 | 3.0 | 1.0 | 0 |
| 14 | TSA-D | 29.0 | 26.0 | 25.0 | 24.0 |
| 15 | 8 | 11.0 | 8.0 | 6.5 | 5.0 |
| 16 | 9 | 11.0 | 6.5 | 3.5 | 1.0 |

*Foam Control of Trisiloxane Alkoxylate Based Foams*

Example 4

This example demonstrates the ability of the SA FCA's to control foam in a surfactant matrix composed of an organosilicone surfactant and an organic cosurfactant. Table 7 provides the composition of the surfactant mixtures and the FCA used. Table 8 provides the compositions for the corresponding controls, which do not contain a SA FCA. Table 9 provides the composition of comparative examples, where the FCA is a conventional silicone based oil. Foam control was determined according to the procedure outlined in Example 3. Foam control was evaluated in this example at 0.25 wt % of the compositions described.

Table 7 -

| Component | I | II | III | IV | V | VI | VII | VIII | IX | X |
|---|---|---|---|---|---|---|---|---|---|---|
| TSA-A | 40 | 40 | 40 | 40 | 40 | 40 | 40 | 40 | 40 | |
| TSA-B | | | | | | | | | | 40 |
| SA-1 | 10 | | 10 | | 10 | | 10 | | | |
| SA-2 | | 10 | | 10 | | 10 | | 10 | 10 | 10 |
| TMN-6 | 50 | 50 | | | | | | | | |
| DA-6 | | | 50 | 50 | | | | | | |
| O-4 | | | | | 50 | 50 | | | | |
| AD-30 | | | | | | | 50 | 50 | | |
| PAO-1 | | | | | | | | | 50 | 50 |

*Composition of Low Foam Surfactant Mixtures*

Table 7 -   (continued)

| Composition of Low Foam Surfactant Mixtures | | | | | | | | | | |
|---|---|---|---|---|---|---|---|---|---|---|
| **Component** | **I** | **II** | **III** | **IV** | **V** | **VI** | **VII** | **VIII** | **IX** | **X** |
| Compatibility[1] | C | C | C | C | C | C | C | C | C | C |

1. Compatibility : C = Clear and Compatible

Table 8 -

| Comparative Surfactant Blends w/o Foam Control Components Weight Percent | | | | | | |
|---|---|---|---|---|---|---|
| **Surfactant** | **A** | **B** | **C** | **D** | **E** | **F** |
| TSA-A | 50 | 50 | 50 | 50 | 50 | |
| TSA-B | | | | | | 50 |
| TMN-6 | 50 | | | | | |
| DA-6 | | 50 | | | | 50 |
| O-4 | | | 50 | | | |
| AD-30 | | | | 50 | | |
| PAO-1 | | | | | 50 | |

Table 9 -

| Comparative Low Foam Formulations | | | | |
|---|---|---|---|---|
| **Component** | **AF-A** | **AF-B** | **AF-C** | **AF-D** |
| PDMS-350 | 10 | 10 | | |
| SAG 100 | | | 10 | 10 |
| DA-6 | 50 | | | 50 |
| PAO-1 | | 50 | 50 | |
| TSA-A | 40 | 40 | 40 | 40 |
| Total | 100 | 100 | 100 | 100 |
| Compatibility | Cloudy/Separates | Cloudy/Separates | Cloudy/Separates | Cloudy/Separates |

The SA's of the present invention provide foam control equal to or better than the conventional silicone based antifoam compound, with the exception of run number 24 which contains silica (Table 10); however the criteria of compatibility, i.e., solubility in the surfactant matrix, is not met for AF-D (Table 9), while the SA's of this invention provide a compatible mixture (Table 7) with the surfactant matrix, and delivers foam control relative to the surfactant matrix alone.

Table 10 -

| Foam Control of Mixed Surfactant Systems | | | | | | | |
|---|---|---|---|---|---|---|---|
| | | | | Foam Height (cm) | | | |
| Run No. | Surfactant | ID | FCA | Initial | 1 min. | 5 min. | 10 min. |
| 17 | TSA-A/TMN-6 | A | None | 3.2 | 2.8 | 2.3 | 2.1 |
| 18 | TSA-A/TMN-6 | I | SA-1 | 1.5 | 1.2 | 1.0 | 0.85 |
| 19 | TSA-A/TMN-6 | II | SA-2 | 2.0 | 1.4 | 1.3 | 1.2 |
| 20 | TSA-A/DA-6 | B | None | 3.4 | 2.7 | 2.4 | 2.0 |
| 21 | TSA-A/DA-6 | III | SA-1 | 1.8 | 1.6 | 1.3 | 1.2 |

Table 10 - (continued)

| | | | | Foam Height (cm) | | | |
|---|---|---|---|---|---|---|---|
| Run No. | Surfactant | ID | FCA | Initial | 1 min. | 5 min. | 10 min. |
| 22 | TSA-A/DA-6 | IV | SA-2 | 2.9 | 2.6 | 2.2 | 2.0 |
| 23 | TSA-A/DA-6 | AF-A | PDMS-350 | 3.6 | 2.8 | 2.6 | 2.4 |
| 24 | TSA-A/DA-6 | AF-D | SAG 100 | 6.5 | 3.5 | 0 | 0 |
| 25 | TSA-A/O-4 | C | None | 2.8 | 2.5 | 2.2 | 2.0 |
| 26 | TSA-A/O-4 | V | SA-1 | 2.0 | 1.6 | 1.4 | 0.8 |
| 27 | TSA-A/O-4 | VI | SA-2 | 2.8 | 2.3 | 2.1 | 1.0 |
| 28 | TSA-A/AD-30 | D | None | 3.0 | 2.6 | 2.2 | 2.2 |
| 29 | TSA-A/AD-30 | VII | SA-1 | 2.4 | 2.2 | 1.9 | 0.8 |
| 30 | TSA-A/AD-30 | VIII | SA-2 | 2.7 | 2.4 | 2.0 | 2.0 |
| 31 | TSA-A/PAO-1 | E | None | 3.2 | 2.4 | 2.2 | 2.0 |
| 32 | TSA-A/PAO-1 | IX | SA-2 | 2.8 | 2.4 | 2.1 | 2.0 |
| 33 | TSA-B/PAO-1 | X | SA-2 | 2.1 | 1.7 | 1.4 | 1.4 |
| 34 | TSA-A/PAO-1 | AF-B | PDMS-350 | 3.1 | 2.4 | 2.4 | 2.1 |
| 35 | TSA-A/PAO-1 | AF-C | SAG 100 | 2.0 | 1.5 | 1.4 | 1.4 |

Example 5

This example demonstrates the ability of the SA FCAs to reduce existing foam more effectively than a conventional PDMS (silica filled) based antifoam compound, SAG 100. Antifoam concentrates were prepared by combining 97.6 wt% silicone alkoxylate with 2.4 wt% hydrophobic silica D-13 UR58; (Degussa Corp. Dublin, OH) in glass jar and mixing with a spatula until the silica was evenly dispersed. The antifoam compositions of Table 11 were combined with 2-propanol in a 1 ounce jar, using 0.5 g of the antifoam and 9.5 g 2-propanol, and agitated by shaking to disperse the antifoam evenly. Foam control was determined by adding 50 mL of KINETIC® MTF (Helena Chemical, Memphis, TN), an organosilicone based nonionic surfactant blend, to a 250 mL graduated cylinder (with stopper top). The cylinder was inverted 10 times by hand to generate foam. At this point 0.1g of antifoam solution was added to the cylinder containing the existing foam. The cylinder was inverted two more times to disperse the antifoam solution, and the initial, 5 minute and 10 minute foam volume was determined for each FCA.

Table 11 -

| Composition of Antifoam Concentrates | | |
|---|---|---|
| | Weight Percent | |
| Component | AFC-1 | AFC-2 |
| SA-1 | 97.5 | --- |
| SA-2 | --- | 97.5 |
| Hydrophobic Silica | 2.5 | 2.5 |
| | 100.0 | 100.0 |

Table 12 shows that the SA FCA's of the present invention, provide improved foam control in organosilicone surfactant based foams, relative to the conventional silicone antifoam.

Table 12

| | | Effect of 100 ppm Antifoam on Existing Foam | | |
|---|---|---|---|---|
| | | Foam Volume (mL) | | |
| Run No.: | Foam Control Agent | Initial | 5 minute | 10 minute |
| 36 | AFC-1 | 23 | 19 | 18 |
| 37 | AFC-2 | 22 | 16 | 11 |
| 38 | SAG® 100 | 44 | 35 | 32 |
| 39 | None | 81 | 65 | 62 |

Example 6

The effect of antifoam concentration on foam control is demonstrated in Table 13, for the SA of the present invention relative to the conventional organosilicone antifoam compound. The antifoam compositions of Tablc 11 (25, 50 and 100 ppm) were added to 50 mL of a 0.25 wt% aqueous solution of KINETIC® MTF. The resulting solution was added to a 250 mL graduated cylinder and inverted 10 times by hand and the foam volume was determined for initially, at 5 and 10 minutes. The SA based antifoam compositions gave enhanced foam control relative to the conventional silicone antifoam compound. The antifoam compositions based on the SA FCA's of this present invention (AFC-1 and AFC-2) required only 25 ppm to provide foam control that was equivalent to or better than 100 ppm of the conventional antifoam.

Table 13 -

| | | | Effect of Antifoam Concentration on Foam Control | | |
|---|---|---|---|---|---|
| | | | Foam Volume (mL) | | |
| Run No.: | Foam Control Agent | ppm | Initial | 5 minute | 10 minute |
| 40 | AFC-1 | 100 | 27 | 17 | 15 |
| 41 | AFC-1 | 50 | 40 | 25 | 23 |
| 42 | AFC-1 | 25 | 48 | 38 | 32 |
| 43 | AFC-2 | 100 | 26 | 18 | 15 |
| 44 | AFC-2 | 50 | 43 | 30 | 20 |
| 45 | AFC-2 | 25 | 59 | 39 | 35 |
| 46 | SAG 100 | 100 | 60 | 46 | 36 |
| 47 | SAG 100 | 50 | 70 | 51 | 41 |
| 48 | SAG 100 | 25 | 71 | 49 | 47 |
| 49 | NONE | 0 | 73 | 62 | 54 |

**Claims**

1.  A process for reducing foam in a surfactant matrix comprising adding a (i) a siloxane alkoxylate foam control agent of the general formula:

$$(CH_3)_3SiO[SiO(CH_3)_2]_X[SiOCH_3R^1]_YSi(CH_3)_3$$

wherein X + Y = 1 to 2, Y ≥ 1, $R^1$ is an alkyleneoxide group of the formula $C_aH_{2a}O(C_3H_6O)_zR^2$ wherein a = 3 to 4, z is l to 15, $R^2$ is hydrogen, a hydrocarbon radical of 1 to 4 carbons or acetyl to (ii) a surfactant matrix comprising at least one organosilicone surfactant;
wherein the siloxane alkoxylate foam control agent is insoluble in water at concentration ≥ 0,1 wt% and soluble or forms a stable dispersion in the surfactant matrix at greater than 50 wt% at ambient conditions.

2.  A process according to claim 1 wherein Y = 1 and a = 3.

3. A process according to claim 1 wherein the siloxane alkoxylate is insoluble in water.

4. A process according to claim 3 wherein the surfactant matrix is comprised of a water soluble or dispersible trisiloxane alkoxylate.

5. A process according to claim 1 where the siloxane alkoxylate is present from 0.1 wt% to 50 wt% and the surfactant matrix is present from 50 wt% to 99.9 wt%.

6. A process according to claim 5 wherein the siloxane alkoxylate is post added to an aqueous solution of the surfactant matrix.

7. A process according to claim 6 wherein the siloxanc alkoxylate is present in an aqueous solution of the surfactant matrix from 25 ppm to 1.0 wt%.

8. A process according to claim 4 wherein the organosilicone of the surfactant matrix is a polyalkyleneoxide copolymer surfactant, containing between 10 and 90 % polyoxyethylene, and between 90 and 10% polyoxypropylene.

9. A process according to claim 4 wherein the surfactant matrix additionally comprises an organic cosurfactant at a ratio of 1 to 99% by weight of the trisiloxane alkoxylate to 99 to 1% of the organic cosurfactant.

10. A composition comprising:

   (i) a siloxane alkoxylate foam control agent of the general formula:

$$(CH_3)_3SiO[SiO(CH3)_2]_X[SiOCH_3R^1]_YSi(CH_3)_3$$

   wherein X + Y = 1 to 2, Y $\geq$ 1, R$^1$ is an alkyleneoxide group of the formula $C_aH_{2a}O(C_3H_6O)_zR^2$ wherein a = 3 to 4, z is 1 to 15, R$^2$ is hydrogen, a hydrocarbon radical of 1 to 4 carbons or acetyl; and
   (ii) a surfactant matrix comprising at least one organosilicone surfactant;

   wherein the siloxane alkoxylate foam control agent is insoluble in water at concentrations $\geq$ 0,1 wt% and soluble or forms a stable dispersion in the surfactant matrix at greater than 50 wt% at ambient conditions.

11. A composition according to claim 10 wherein the composition is essentially free of additional foam control agent.

12. A composition according to claim 10 wherein the surfactant matrix additionally comprises an organic cosurfactant.

13. A composition according to claim 12 wherein the organic cosurfactant has a hydrophobe of less than or equal to ten carbons in the main chain thereof.

14. A composition according to claim 10 additionally comprising a pesticide.

15. A composition according to claim 11 additionally comprising silica.

16. A composition comprising a siloxane alkoxylate foam control agent of the general formula:

$$(CH_3)_3SiO[SiO(CH3)_2]_X[SiOCH_3R^1]_YSi(CH_3)_3$$

   wherein X + Y = 1 to 2, Y $\geq$ 1, R$^1$ is an alkyleneoxide group of the formula $C_aH_{2a}O(C_3H_6O)_zR^2$ wherein a = 3 to 4, z is 1 to 15, R$^2$ is hydrogen, a hydrocarbon radical of 1 to 4 carbons or acetyl, an effective amount of an emulsifier and water,
   wherein the siloxane alkoxylate foam control agent is insoluble in water at concentrations $\geq$ 0,1 wt% and soluble or forms a stable dispersion in the surfactant matrix at greater than 50 wt% at ambient conditions.

17. The composition according to claim 16 additionally comprising silica.

**Patentansprüche**

1. Verfahren zur Schaumreduzierung in einer oberflächenaktiven Matrix, umfassend das Zugeben von (i) einem Siloxanalkoxylat-Schaumkontrollmittel der allgemeinen Formel:

$$(CH_3)_3SiO[SiO(CH_3)_2]_X[SiOCH_3R^1]_YSi(CH_3)_3,$$

worin X + Y = 1 bis 2, Y ≥1, $R^1$ fiir eine Alkylenoxidgruppe der Formel $C_aH_{2a}O(C_3H_6O)_zR^2$ steht, worin a = 3 bis 4, z für 1 bis 15 steht, R für Wasserstoff, ein Kohlenwasserstoffradikal mit 1 bis 4 Kohlenstoffen oder Acetyl steht,
zu (ii) einer oberflächenaktiven Matrix, die wenigstens ein oberflächenaktives Organosilikonmatrial umfasst; worin das Siloxanalkoxylat-Schaumkontrollmittel bei einer Konzentration ≥ 0,1 Gew.-% in Wasser unlöslich ist und bei über 50 Gew.-% bei Umgebungsbedingungen in der oberflächenaktiven Matrix löslich ist oder eine stabile Dispersion bildet.

2. Verfahren nach Anspruch 1, worin Y = 1 und a = 3 ist.

3. Verfahren nach Anspruch 1, worin das Siloxanalkoxylat in Wasser unlöslich ist.

4. Verfahren nach Anspruch 3, worin die oberflächenaktive Matrix aus einem wasserlöslichen oder dispergierbaren Trisiloxanalkoxylat besteht.

5. Verfahren nach Anspruch 1, worin das Siloxanalkoxylat von 0,1 Gew.-% bis 50 Gew.-% und die oberflächenaktive Matrix von 50 Gew.-% bis 99,9 Gew.-% vorliegt.

6. Verfahren nach Anspruch 5, worin das Siloxanalkoxylat nachträglich zu einer wässrigen Lösung der oberflächenaktiven Matrix zugegeben wird.

7. Verfahren nach Anspruch 6, worin das Siloxanalkoxylat in einer wässrigen Lösung der oberflächenaktiven Matrix von 25 ppm bis 1,0 Gew.-% vorliegt.

8. Verfahren nach Anspruch 4, worin das Organosilikon der oberflächenaktiven Matrix ein oberflächenaktives Polyalkylenoxid-Copolymer-Mittel ist, welches zwischen 10 und 90 % Polyoxyethylen und zwischen 90 und 10 % Polyoxypropylen enthält.

9. Verfahren nach Anspruch 4, worin die oberflächenaktive Matrix zusätzlich ein oberflächenaktives organisches Co-Mittel in einem Verhältnis von 1 bis 99 Gew.-% Trisiloxanalkoxylat zu 99 bis 1 % organisches oberflächenaktives Co-Mittel enthält.

10. Zusammensetzung, umfassend:

    (i) ein Siloxanalkoxylat-Schaumkontrollmittel der allgemeinen Formel:

$$(CH_3)_3SiO[SiO(CH_3)_2]_X[SiOCH_3R^1]_YSi(CH_3)_3,$$

worin X + Y = 1 bis 2, Y ≥ 1, $R^1$ für eine Alkylenoxidgruppe der Formel $C_aH_{2a}O(C_3H_6O)_zR^2$ steht, worin a = 3 bis 4, z für 1 bis 15 steht, $R^2$ für Wasserstoff, ein Kohlenwasserstoffradikal mit 1 bis 4 Kohlenstoffen oder Acetyl steht; und
(ii) eine oberflächenaktive Matrix, umfassend wenigstens ein oberflächenaktives Organosilikonmittel;

worin das Siloxanalkoxylat-Schaumkontrollmittel bei Konzentrationen ≥ 0,1 Gew.-% in Wasser unlöslich ist und bei über 50 Gew.-% bei Umgebungsbedingungen in der oberflächenaktiven Matrix löslich ist oder eine stabile Dispersion bildet.

11. Zusammensetzung nach Anspruch 10, worin die Zusammensetzung im wesentlichen frei von zusätzlichem Schaumkontrollmittel ist.

**12.** Zusammensetzung nach Anspruch 10, worin die oberflächenaktive Matrix zusätzlich ein oberflächenaktives organisches Co-Mittel enthält.

**13.** Zusammensetzung nach Anspruch 12, worin das oberflächenaktive organische Co-Mittel eine Hydrophobizität von weniger oder gleich 10 Kohlenstoffen in der Hauptkette davon enthält.

**14.** Zusammensetzung nach Anspruch 10, zusätzlich umfassend ein Pestizid.

**15.** Zusammensetzung nach Anspruch 11, zusätzlich umfassend Siliciumdioxid.

**16.** Zusammensetzung, umfassend ein Siloxanalkoxylat-Schaumkontrollmittel der allgemeinen Formel:

$$(CH_3)_3SiO[SiO(CH_3)_2]_X[SiOCH_3R^1]_YSi(CH_3)_3,$$

worin X + Y = 1 bis 2, Y ≥1, $R^1$ für eine Alkylenoxidgruppe der Formel $C_aH_{2a}O(C_3H_6O)_zR^2$ steht, worin a = 3 bis 4, z für 1 bis 15 steht, $R^2$ für Wasserstoff, ein Kohlenwasserstoffradikal mit 1 bis 4 Kohlenstoffen oder Acetyl steht,
eine wirksame Menge eines Emulgators und Wasser,
worin das Siloxanalkoxylat-Schaumkontrollmittel in einer Konzentration ≥ 0,1 Gew.-% in Wasser unlöslich ist und bei über 50 Gew.-% bei Umgebungsbedingungen in der oberflächenaktiven Matrix löslich ist oder eine stabile Dispersion bildet.

**17.** Zusammensetzung nach Anspruch 16, zusätzlich umfassend Siliciumdioxid.

**Revendications**

**1.** Procédé de réduction de mousse dans une matrice de produits tensioactifs comprenant l'ajout de (i) un agent anti-mousse à base d'alkoxylate de siloxane de formule générale :

$$(CH_3)_3SiO[SiO(CH_3)_2]_X[SiOCH_3R^1]_YSi(CH_3)_3$$

dans laquelle X + Y = 1 à 2, Y ≥ 1, $R^1$ est un groupe oxyde d'alkylène de formule $C_aH_{2a}O(C_3H_6O)_zR^2$ dans laquelle a = 3 à 4, z va de 1 à 15, $R^2$ est un atome d'hydrogène, un radical hydrocarboné de 1 à 4 atomes de carbone ou acétyle, à (ii) une matrice de produits tensioactifs comprenant au moins un produit tensioactif à base d'organosilicone ;
dans lequel l'agent anti-mousse à base d'alkoxylate de siloxane est insoluble dans l'eau à une concentration ≥ 0,1% en poids et est soluble ou forme une dispersion stable dans la matrice de produits tensioactifs à plus de 50% en poids dans des conditions ambiantes.

**2.** Procédé selon la revendication 1 dans lequel Y = 1 et a = 3.

**3.** Procédé selon la revendication 1 dans lequel l'alkoxylate de siloxane est insoluble dans l'eau.

**4.** Procédé selon la revendication 3 dans lequel la matrice de produits tensioactifs comprend un alkoxylate de trisiloxane soluble ou dispersible dans l'eau.

**5.** Procédé selon la revendication 1 dans lequel l'alkoxylate de siloxane est présent de 0,1% en poids à 50% en poids et la matrice de produits tensioactifs est présente de 50% en poids à 99,9% en poids.

**6.** Procédé selon la revendication 5 dans lequel l'alkoxylate de siloxane est ajouté ultérieurement à une solution aqueuse de la matrice de produits tensioactifs.

**7.** Procédé selon la revendication 6 dans lequel l'alkoxylate de siloxane est présent dans une solution aqueuse de la matrice de produits tensioactifs de 25 ppm à 1,0% en poids.

**8.** Procédé selon la revendication 4 dans lequel l'organosilicone de la matrice de produits tensioactifs est un produit tensioactif à base de copolymère d'oxydes de polyalkylène, contenant entre 10 et 90% de polyoxyéthylène, et entre 90 et 10% de polyoxypropylène.

**9.** Procédé selon la revendication 4 dans lequel la matrice de produits tensioactifs comprend en outre un coproduit tensioactif organique dans une proportion allant de 1 à 99% en poids de l'alkoxylate de trisiloxane à 99 à 1% du coproduit tensioactif organique.

**10.** Composition comprenant :

(i) un agent anti-mousse à base d'alkoxylate de siloxane de formule générale :

$$(CH_3)_3SiO[SiO(CH_3)_2]_X[SiOCH_3R^1]_YSi(CH_3)_3$$

dans laquelle X + Y = 1 à 2, Y ≥ 1, $R^1$ est un groupe oxyde d'alkylène de formule $C_aH_{2a}O(C_3H_6O)_zR^2$ dans laquelle a = 3 à 4, z va de 1 à 15, $R^2$ est un atome d'hydrogène, un radical hydrocarboné de 1 à 4 atomes de carbone ou acétyle ; et
(ii) une matrice de produits tensioactifs comprenant au moins un produit tensioactif à base d'organosilicone ;

dans laquelle l'agent anti-mousse à base d'alkoxylate de siloxane est insoluble dans l'eau à des concentrations ≥ 0,1% en poids et est soluble ou forme une dispersion stable dans la matrice de produits tensioactifs à plus de 50% en poids dans des conditions ambiantes.

**11.** Composition selon la revendication 10 dans laquelle la composition est essentiellement exempte d'agent anti-mousse additionnel.

**12.** Composition selon la revendication 10 dans laquelle la matrice de produits tensioactifs comprend en outre un coproduit tensioactif organique.

**13.** Composition selon la revendication 12 dans laquelle le coproduit tensioactif organique a un groupement hydrophobe de moins de 10 ou de 10 atomes de carbone dans sa chaîne principale.

**14.** Composition selon la revendication 10 comprenant en outre un pesticide.

**15.** Composition selon la revendication 11 comprenant en outre de la silice.

**16.** Composition comprenant un agent anti-mousse à base d'alkoxylate de siloxane de formule générale :

$$(CH_3)_3SiO[SiO(CH_3)_2]_X[SiOCH_3R^1]_YSi(CH_3)_3$$

dans laquelle X + Y = 1 à 2, Y ≥ 1, $R^1$ est un groupe oxyde d'alkylène de formule $C_aH_{2a}O(C_3H_6O)_zR^2$ dans laquelle a = 3 à 4, z va de 1 à 15, $R^2$ est un atome d'hydrogène, un radical hydrocarboné de 1 à 4 atomes de carbone ou acétyle, une quantité efficace d'un émulsifiant et de l'eau,
dans laquelle l'agent anti-mousse à base d'alkoxylate de siloxane est insoluble dans l'eau à des concentrations ≥ 0,1% en poids et est soluble ou forme une dispersion stable dans la matrice de produits tensioactifs à plus de 50% en poids dans des conditions ambiantes.

**17.** Composition selon la revendication 16 comprenant en outre de la silice.